# EUROPEAN PATENT APPLICATION

(11) **EP 2 657 827 A2**
(43) Date of publication of application: **30.10.2013**
(21) Application number: 13150617.2
(22) Date of filing: 09.01.2013
(51) Int. Cl.: G06F 3/0488, G06F 3/16, G06F 3/038

(54) **Touch detection method and touch control device using the same**

(30) Priority: 26.04.2012 US 201261638501 P; 21.08.2012 TW 101130305
(71) Applicant: Acer Incorporated, New Taipei City 221 (TW)
(72) Inventor: Ko, Chueh-Pin, 221 New Taipei City (TW)
(74) Representative: Becker Kurig Straus

(57) **Abstract**

A touch detection method and a touch control device using the same are provided. The touch control device has a touch unit. The touch detection method includes following steps. A voice input signal and a touch input signal generated by a touch behavior of an input tool on the touch unit are detected and recorded. The input tool and the touch behavior thereof are identified according to the voice input signal and the touch input signal. Herein the touch input signal indicates a touch property corresponding to the touch behavior of the input tool on the touch unit, and the voice input signal is used for identifying the type of the input tool.

## Description

### BACKGROUND OF THE INVENTION

### 1. Field of the Invention

The invention generally relates to a touch signal detection technique, and more particularly, to a touch detection method in which a voice input signal is used for identification and a touch control device using the same.

### 2. Description of Related Art

Touch control devices (for example, smart phones) have been broadly used along with the development of touch detection techniques. Based on the adopted touch detection techniques, existing touch control devices can be categorized into resistive, capacitive, optical, acoustic wave, and electromagnetic touch control devices.

Generally speaking, any touch control device is used for detecting clicks or gestures performed by a user on the touch-sensitive surface of the touch control device. To identify an object working on a touch control device, taking an optical touch control device as an example, a mark (for example, a barcode) has to be placed in advance on the part of the object that gets in contact with the touch-sensitive surface of the touch control device to be used for identifying the object. Or, the object may also be identified based on its shape. However, such identification techniques are not suitable for today's touch control devices (for example, smart phones) that tend to be designed very small and thin.

In other words, none of aforementioned touch control devices can effectively identify the type of an input tool (for example a finger or a stylus).

### SUMMARY OF THE INVENTION

Accordingly, the invention is directed to a touch detection method and a touch control device, in which the type and touch behaviors of an input tool can be effectively identified.

The invention provides a touch detection method adapted to a touch control device. The touch control device has a touch unit. The touch detection method includes following steps. A voice input signal and a touch input signal generated by a touch behavior of an input tool on the touch unit are detected and recorded. The input tool and the touch behavior thereof are identified according to the voice input signal and the touch input signal. Herein the touch input signal indicates a touch property corresponding to the touch behavior of the input tool on the touch unit, and the voice input signal is used for identifying the type of the input tool.

The invention provides a touch control device including a touch unit, a voice detection circuit, a touch detection circuit, a storage circuit, and a control circuit. The voice detection circuit is coupled to the touch unit and configured to detect a voice input signal generated by a touch behavior of an input tool on the touch unit. The touch detection circuit is coupled to the touch unit and configured to detect a touch input signal generated by the touch behavior of the input tool on the touch unit. The storage circuit is coupled to the voice detection circuit and the touch detection circuit and configured to store the voice input signal and the touch input signal. The control circuit is coupled to the storage circuit, the voice detection circuit, and the touch detection circuit and configured to identify the input tool and the touch behavior thereof according to the voice input signal and the touch input signal. Herein the touch input signal indicates a touch property corresponding to the touch behavior of the input tool on the touch unit, and the voice input signal is used for identifying the type of the input tool.

As described above, embodiments of the invention provide a touch detection method and a touch control device, in which the type and a touch behavior of an input tool can be identified according to a voice input signal and a touch input signal generated by the touch behavior of the input tool on the touch unit.

These and other exemplary embodiments, features, aspects, and advantages of the invention will be described and become more apparent from the detailed description of exemplary embodiments when read in conjunction with accompanying drawings.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a block diagram of a touch control device according to a first embodiment of the invention.

FIG. 2 is a flowchart of a touch detection method according to the first embodiment of the invention.

FIG. 3 is a flowchart of a touch detection method according to a second embodiment of the invention.

FIG. 4 is a flowchart of determining whether a touch input signal is detected according to the second embodiment of the invention.

FIG. 5 is a diagram of determining whether a touch input signal is detected during an acceptable time period according to the second embodiment of the invention.

FIG. 6 is a flowchart of a touch detection method according to a third embodiment of the invention.

FIG. 7 is a flowchart of a touch detection method according to a fourth embodiment of the invention.

FIG. 8 is a flowchart of a touch detection method according to a fifth embodiment of the invention.

FIG. 9 is a flowchart of a touch detection method according to a sixth embodiment of the invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

In order to allow a touch control device (for example, a touchpad) to effectively identify input signals generated by different input tools, an embodiment of the invention provides a touch detection method, in which the type and a touch behavior of an input tool are identified by using a voice input signal (for example, a scrubbing sound or a impact sound) generated by the input tool on the touch control device along with a touch input signal generated by the touch control device. Thereby, both the accuracy in the detection of touch signals and the flexibility in the application of the touch control device are effectively improved. In addition, a touch control device using the touch detection method is also provided by an embodiment of the invention. Exemplary embodiments of the invention will be described below with reference to accompanying drawings.

### First Embodiment

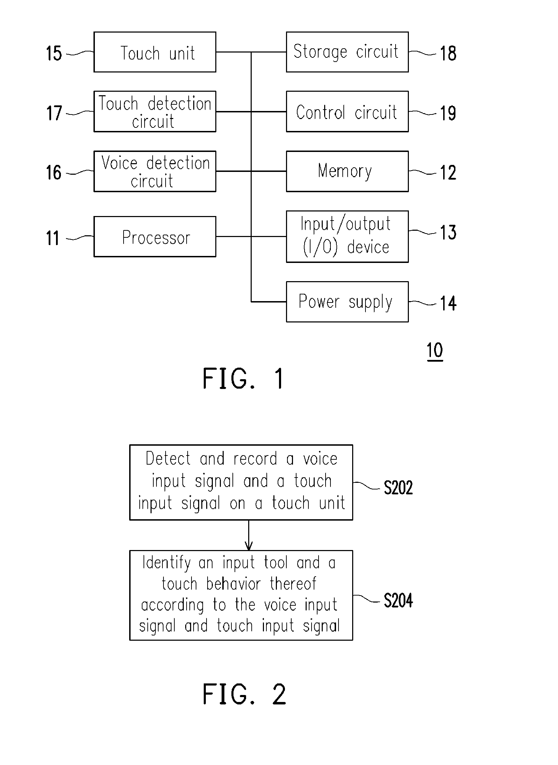

FIG. 1 is a block diagram of a touch control device according to the first embodiment of the invention. Referring to FIG. 1, the touch control device 10 includes a touch unit 15, a voice detection circuit 16, a touch detection circuit 17, a storage circuit 18, and a control circuit 19. In addition, the touch control device 10 may further include at least one of a processor 11, a memory 12, an input/output (I/O) device 13, and a power supply 14. The touch control device 10 may be a personal digital assistant (PDA), a smart phone, an e-book, a game console, a tablet PC, or a desktop PC. However, the implementation of the touch control device 10 is not limited herein. Additionally, the touch control device 10 in the present embodiment may further include other circuit components, which is not limited in the invention.

The processor 11 controls the overall operation of the touch control device 10. In the present embodiment, the processor 11 may be a micro-processor or a central processing unit (CPU). However, the invention is not limited thereto. The memory 12 may be any non-volatile memory (for example, a dynamic random access memory (DRAM) or a static random access memory (SRAM)) or a combination of different types of non-volatile memories. Besides, the memory 12 may further include one of a combination of a hard disc, an optical disc, and an external storage device (for example, a memory card or a flash drive). Herein the implementation of the memory 12 is not limited. The I/O device 13 may be a button, a mouse, an earphone, a microphone, or a speaker. The power supply 14 supplies power to the touch control device 10. The power supply 14 may be a battery.

The touch unit 15 may include a touch screen, a touchpad, a touch button, and/or a touch scroll wheel and may be implemented by using a resistive, a capacitive, an optical, an acoustic wave, or an electromagnetic touch sensing technique. Herein the type of the touch unit 15 is not limited. For example, a user can generate input signals on the touch unit 15 by clicking or sliding an input tool (for example, a finger or a stylus) on the touch unit 15.

The voice detection circuit 16 is coupled to the touch unit 15 and configured to detect a voice input signal generated by a touch behavior of an input tool on the touch unit 15. In the present embodiment, the voice detection circuit 16 includes one or more sound receiving devices, such as microphones. In addition, the voice detection circuit 16 may also include a noise filter for filtering noises.

The touch detection circuit 17 is coupled to the touch unit 15 and configured to detect a touch input signal generated by the touch behavior of the input tool on the touch unit 15. In the present embodiment, the touch detection circuit 17 is a touch-sensitive panel controller.

It should be mentioned that aforementioned touch behavior may be a click or slide of the input tool at one or more touch positions on the touch unit 15. In addition, the input tool may be any part (for example, a fingernail, a finger pad, a knuckle, a finger tip, or a cheek) of a human body, an office tool (for example, a pen, a marker, a brush pen, a rubber eraser), or any other object. The type of the input tool is not limited in the invention.

The storage circuit 18 is coupled to the voice detection circuit 16 and the touch detection circuit 17 and configured to store the voice input signal and the touch input signal. The storage circuit 18 may be any non-volatile memory (for example, a DRAM or a SRAM) or a combination of different non-volatile memories.

The control circuit 19 is coupled to the voice detection circuit 16, the touch detection circuit 17, and the storage circuit 18 and configured to identify the input tool working on the touch unit 15 and touch behaviors thereof according to the voice input signal and the touch input signal. Particularly, in the present embodiment, the touch input signal is used for indicating touch information, such as a touch property or a touch position, corresponding to the touch behavior of the input tool on the touch unit 15, and the voice input signal is used for identifying the type of the input tool. For example, the control circuit 19 can identify the current input tool as a "fingernail" (or any other type of input tool) and the touch behavior as "scratch" (or any other type of touch behavior) based on the voice signal (for example, the waveform, frequency, and duration of the signal) and the touch signal (for example, the coordinates, area, pressure, and duration of the touch action) generated by the user's input tool on the touch unit 15.

It should be mentioned that the processor 11, the memory 12, the I/O device 13, the power supply 14, the touch unit 15, the voice detection circuit 16, the touch detection circuit 17, the storage circuit 18, and the control circuit 19 are hardware devices composed of logic circuit components and are respectively configured to execute the functions described above. In addition, these devices may also be implemented as software programs or firmware programs stored in the memory 12 of the touch control device 10. For example, in an exemplary embodiment, these software programs or firmware program for executing aforementioned functions are loaded into the processor 11 of the touch control device 10 to respectively execute the functions.

FIG. 2 is a flowchart of a touch detection method according to the first embodiment of the invention. Referring to FIG. 1 and FIG. 2, in step S202, the voice detection circuit 16 and the touch detection circuit 17 respectively detect the voice input signal and the touch input signal and record them into the storage circuit 18. Herein the voice input signal and the touch input signal are generated by a touch behavior of the input tool on the touch unit 15. Next, in step S204, the control circuit 19 identifies the input tool and the touch behavior thereof according to the recorded voice input signal and touch input signal.

In the second embodiment of the invention, the touch control device generates a corresponding command based on the first detected voice input signal along with the subsequently detected touch input signal.

### Second Embodiment

The hardware structure of the touch control device in the second embodiment is substantially the same as that of the touch control device in the first embodiment. The difference is that in the second embodiment, the touch control device first detects a voice input signal generated by an input tool and then identifies the input tool and a touch behavior thereof according to the voice input signal and a touch input signal generated by the same input tool. Thereby, the touch control device can generate a corresponding application-specific command according to aforementioned identification result, so that the flexibility in the application of the touch control device is greatly improved.

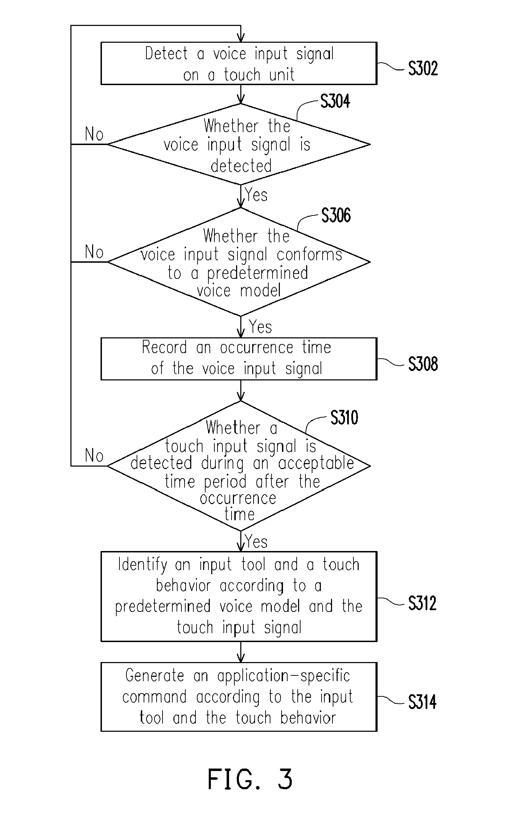

FIG. 3 is a flowchart of a touch detection method according to the second embodiment of the invention. Referring to FIG. 1 and FIG. 3, in step S302, the voice detection circuit 16 detects a voice input signal on the touch unit 15. Then, in step S304, the voice detection circuit 16 determines whether the voice input signal is detected. If the voice detection circuit 16 does not detect the voice input signal, after step S304, the voice detection circuit 16 executes step S302 again.

If the voice detection circuit 16 detects the voice input signal in step S304, in step S306, the control circuit 19 determines whether the detected voice input signal conforms to a predetermined voice model. For example, the control circuit 19 compares a voice model of the detected voice input signal with each of a plurality of predetermined voice models in the storage circuit 18 and determines whether the voice model of the detected voice input signal is the same as or similar to at least one of the predetermined voice models. Thus, the control circuit 19 can effectively determine whether related information of the input tool generating the voice input signal is already recorded in the storage circuit 18. If the control circuit 19 determines that the detected voice input signal does not conform to any of the predetermined voice models, after step S306, the voice detection circuit 16 executes step S302 again.

Additionally, if the control circuit 19 determines in step S306 that the detected voice input signal conforms to a predetermined voice model, in step S308, the control circuit 19 records the voice input signal and an occurrence time thereof in the storage circuit 18. Besides, in step S310, the control circuit 19 determines whether the touch detection circuit 17 detects a touch input signal during an acceptable time period after the occurrence time.

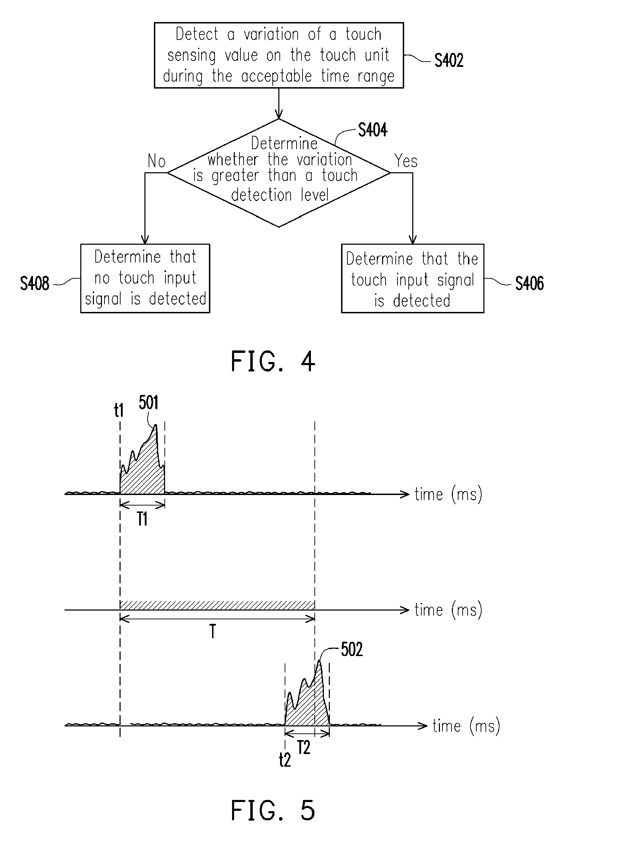

Below, how a control circuit determines whether a touch detection circuit detects a touch input signal in step S310 of FIG. 3 will be explained with reference to FIG. 4.

FIG. 4 is a flowchart of determining whether a touch input signal is detected according to the second embodiment of the invention. Referring to FIG. 1 and FIG. 4, in step S402, the touch detection circuit 17 detects a variation of a touch sensing value on the touch unit 15 during an acceptable time period. Herein the touch sensing value is corresponding to the touch position of the user or the input tool on the touch unit 15. Taking a capacitive touch unit 15 as an example, a touch sensing value on a capacitive touch unit 15 is a coupling capacitance, and the coupling capacitance is usually generated in response to a touch action performed by a user. In particular, aforementioned variation of the touch sensing value is the variation of the coupling capacitance.

Next, in step S404, the control circuit 19 determines whether the variation of the touch sensing value (for example, the variation of a coupling capacitance) detected by the touch detection circuit 17 during the acceptable time period is greater than a touch detection level. Herein the touch detection level is corresponding to a predetermined voice model to which the voice input signal previously detected by the voice detection circuit 16 conforms. In addition, different predetermined voice models may correspond to different touch detection levels. Taking a predetermined voice model corresponding to the sound generated when a fingernail touches the touch unit 15 and a predetermined voice model corresponding to the sound generated when a finger pad touches the touch unit 15 as examples, the area generated when the fingernail touches the touch unit 15 is usually smaller than that generated when the finger pad touches the touch unit 15. Thus, the touch detection level corresponding to the fingernail touching the touch unit 15 can be set to a lower value than that corresponding to the finger pad touching the touch unit 15. However, the invention is not limited thereto, and the touch detection level corresponding to each predetermined voice model can be set according to the actual design requirement.

If the control circuit 19 determines in step S404 that the variation of the touch sensing value is greater than the touch detection level, in step S406, the control circuit 19 determines that the touch detection circuit 17 detects the touch input signal corresponding to the voice input signal previously received by the voice detection circuit 16 during the acceptable time period. Besides, if the control circuit 19 determines in step S404 that the variation of the touch sensing value is not greater than the touch detection level, in step S408, the control circuit 19 determines that the touch detection circuit 17 does not detect the touch input signal corresponding to the voice input signal previously received by the voice detection circuit 16 during the acceptable time period.

It should be mentioned that the acceptable time period mentioned in step S310 is used for synchronizing the voice input signal and the touch input signal. In other words, after the voice detection circuit detects the voice input signal, if the touch detection circuit detects the touch input signal during the acceptable time period, the touch input signal and the voice input signal are generated by the same touch behavior. Accordingly, the first detected voice input signal can be used for identification purpose (i.e., the first detected voice input signal is a valid signal). This step will be explained below with reference to FIG. 5.

FIG. 5 is a diagram of determining whether a touch input signal is detected during an acceptable time period according to the second embodiment of the invention. Referring to FIG. 5, the voice detection circuit 16 detects a voice input signal 501 at time t1, and the voice input signal 501 is constantly detected during the time period T1 (for example, 100ms). Thus, during the acceptable time period T after time t1, whether the touch detection circuit 17 detects the touch input signal determines whether the voice input signal 501 is valid (i.e., whether the first detected voice input signal 501 can be used for identification purpose). Additionally, in the present embodiment, the acceptable time period T may be longer than 100ms and shorter than 500ms (for example, 200ms). However, the invention is not limited thereto, and the duration of the acceptable time period T can be determined according to the actual design requirement. For example, the acceptable time period T can be shortened to 80ms to reduce the false positive rate.

Next, the touch detection circuit 17 detects a touch input signal 502 at time t2, and the touch input signal 502 is constantly detected during the time period T2 (for example, 100ms). Herein because time t2 is within the acceptable time period T after time t1, the touch input signal 502 and the voice input signal 501 are determined to be generated by the same touch behavior. Accordingly, the voice input signal 501 is determined to be valid and can be used for identifying the input tool.

Referring to FIG. 1 and FIG. 3 again, in step S310, if the touch detection circuit 17 does not detect any touch input signal during the acceptable time period, the previously detected voice input signal is determined to be invalid, and after step S310, the voice detection circuit 16 executes step S302 again. In addition, if the touch detection circuit 17 detects a touch input signal (for example, the touch input signal 502 in FIG. 5) during the acceptable time period, in step S312, the control circuit 19 identifies the input tool and the touch behavior thereof according to the predetermined voice model obtained above and the detected touch input signal. For example, if the control circuit 19 determines that the voice model of the detected voice input signal is the same as the predetermined voice model corresponding to "knuckle", the control circuit 19 identifies that the input tool generating the voice input signal is a "knuckle". In addition, the control circuit 19 can identify the touch behavior of the input tool based on the position, duration, and slide distance of the detected touch input signal.

Thereafter, in step S314, the control circuit 19 generates an application-specific command according to the identified input tool and touch behavior thereof. For example, when the control circuit 19 identifies that the input tool is a "knuckle" and the touch behavior is a "click", the application-specific command generated by the control circuit 19 is then a "cut" command issued on the clicked file. Or, when the control circuit 19 identifies that the input tool is a "fingernail" and the touch behavior is a "click", the application-specific command generated by the control circuit 19 is then a "delete" command issued on the clicked file. However, the invention is not limited to foregoing examples. For example, when the user clicks the touch unit 15 with a knuckle, the corresponding application-specific command is "pressing down the right button of the mouse", and when the user scratches the touch unit 15 upwards or downwards with a fingernail, the corresponding application-specific command is "scrolling up or down with the mouse wheel". Other applications, such as cropping a picture with a fingernail and moving a picture or opening a file with a finger pad may also be implemented. In another example, when the control circuit 19 identifies that the touch behavior is "circle", a "resuming previous action" command is executed regardless of the type of the input tool.

It should be noted that an application-specific command may be generated by the control circuit 19 or the processor 11. To be specific, the control circuit 19 only records and transmits valid voice input signal and touch input signal to the processor 11, and the processor 11 converts the signals into an application-specific command.

Additionally, the present embodiment also supports a touch input signal at multiple touch positions. For example, when a user encloses an area on the touch unit 15 with five fingernails, the corresponding application-specific command is to delete all the files within this area.

In other words, aforementioned application-specific command is defined based on the type of the input tool and the touch behavior thereof and is corresponding to a specific function. Besides, the application-specific command can be adjusted according to design or actual requirements. Moreover, while implemented, the control circuit 19 can set a plurality of contact identifications (CIDs) and correspond each CID to an input tool. Thus, when the control circuit 19 needs to generate an application-specific command, it enquires about the CID corresponding to the voice input signal and generates the corresponding application-specific command according to the CID and the touch behavior.

### Third Embodiment

The hardware structure of the touch control device in the third embodiment is substantially the same as that of the touch control device in the first embodiment, and the touch detection method in the third embodiment is similar to that in the second embodiment. The difference is that in the third embodiment, if the touch control device determines that the detected voice input signal does not conform to any predetermined voice model, the touch control device generates a basic command according to the detected touch input signal. Thereby, the touch control device can still perform the essential functions when no voice input signal can be used for identification purpose, so that the flexibility in the application of the touch control device is improved. In other words, the function of aforementioned basic command is determined based on a basic touch behavior.

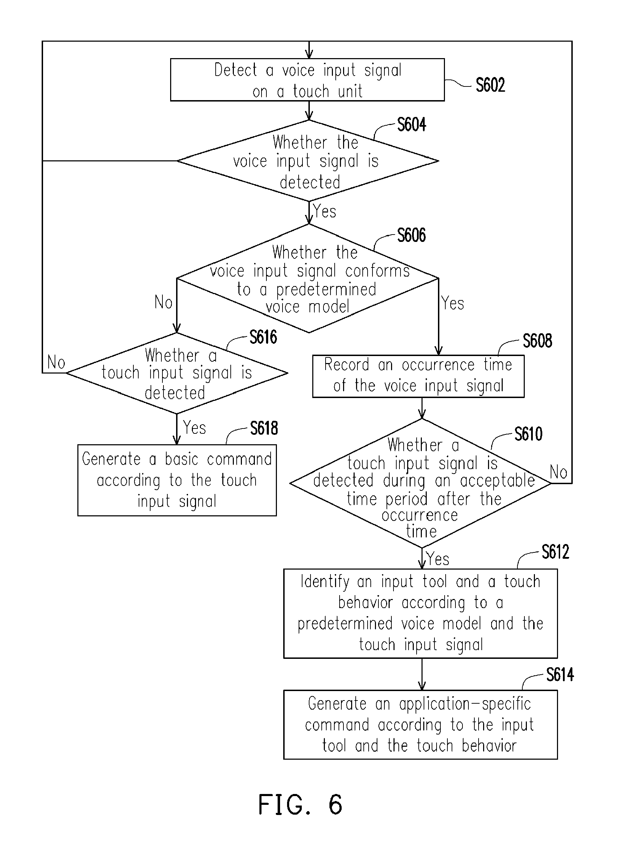

FIG. 6 is a flowchart of a touch detection method according to the third embodiment of the invention. Referring to FIG. 1 and FIG. 6, in step S602, the voice detection circuit 16 detects a voice input signal on the touch unit 15. Then, in step S604, the voice detection circuit 16 determines whether the voice input signal is detected. If the voice detection circuit 16 does not detect any voice input signal, after step S604, the voice detection circuit 16 executes step S602 again.

If the voice detection circuit 16 detects the voice input signal in step S604, in step S606, the control circuit 19 determines whether the detected voice input signal conforms to a predetermined voice model. If the control circuit 19 determines that the detected voice input signal does not conform to any predetermined voice model, after step S606, the voice detection circuit 16 executes step S602 again.

On the other hand, if the control circuit 19 determines that the detected voice input signal conforms to the predetermined voice model in step S606, in step S608, the control circuit 19 records the voice input signal and the occurrence time thereof into the storage circuit 18. Besides, in step S610, the control circuit 19 determines whether the touch detection circuit 17 detects a touch input signal during an acceptable time period after the occurrence time. If the touch detection circuit 17 does not detect any touch input signal during the acceptable time period, after step S610, the voice detection circuit 16 executes step S602 again and determines the voice input signal recorded in the storage circuit 18 to be invalid. On the other hand, if the touch detection circuit 17 detects a touch input signal (for example, the touch input signal 402 in FIG. 4) during the acceptable time period, in step S612, the control circuit 19 identifies the input tool and the touch behavior thereof according to the predetermined voice model obtained above and the detected touch input signal. Next, in step S614, the control circuit 19 generates an application-specific command according to the identified input tool and touch behavior.

On the other hand, if the control circuit 19 determines in step S606 that the voice input signal detected by the voice detection circuit 16 does not conform to any predetermined voice model, in step S616, the control circuit 19 determines whether the touch detection circuit 17 detects a touch input signal. If the touch detection circuit 17 does not detect any touch input signal, after step S616, the voice detection circuit 16 executes step S602 again. If the touch detection circuit 17 detects the touch input signal in step S616, in step S618, the control circuit 19 generates a basic command according to the detected touch input signal. The basic command is a basic operation command corresponding to a touch behavior, such as a click at a single position, a click at multiple positions, a long press at a single position, a long press at multiple positions, or a dragging action.

### Fourth Embodiment

The hardware structure of the touch control device in the fourth embodiment is substantially the same as that of the touch control device in the first embodiment, and the touch detection method in the fourth embodiment is an additional implementation of any one of the first, second, and third embodiments described above. To be specific, in the fourth embodiment, when the touch control device detects a voice input signal, it adaptively adjusts the touch detection level corresponding to the voice input signal. Thus, the touch control device can set an appropriate touch detection level regarding different voice input signal and the corresponding predetermined voice model, so that the detection accuracy of the touch control device won't be reduced due to touch input signals exceeding a touch detection level.

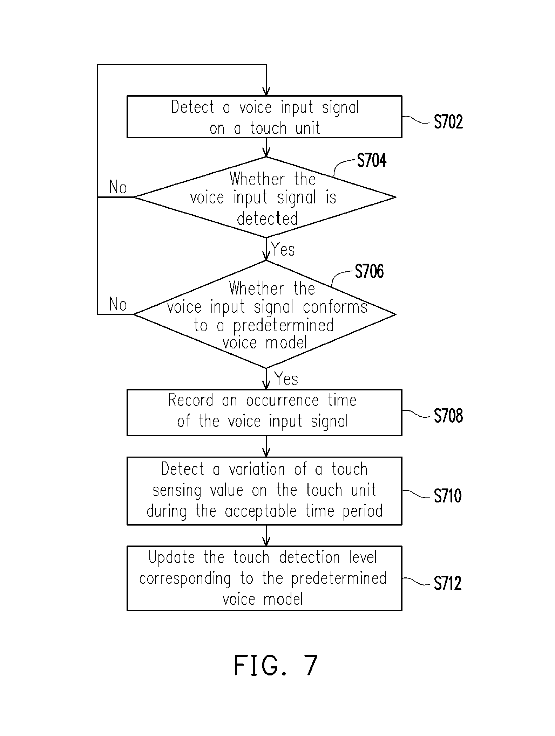

FIG. 7 is a flowchart of a touch detection method according to the fourth embodiment of the invention. Referring to FIG. 1 and FIG. 7, in step S702, the voice detection circuit 16 detects a voice input signal on the touch unit 15. Then, in step S704, the voice detection circuit 16 determines whether the voice input signal is detected. If the voice detection circuit 16 does not detect any voice input signal, after step S704, the voice detection circuit 16 executes step S702 again.

If the voice detection circuit 16 detects the voice input signal in step S704, in step S706, the control circuit 19 determines whether the voice input signal detected by the voice detection circuit 16 conforms to a predetermined voice model. If the control circuit 19 determines that the detected voice input signal does not conform to any predetermined voice model, after step S706, the voice detection circuit 16 executes step S702 again.

Additionally, if the control circuit 19 determines in step S706 that the voice input signal detected by the voice detection circuit 16 conforms to a predetermined voice model, in step S708, the control circuit 19 records the voice input signal and the occurrence time thereof into the storage circuit 18. Next, in step S710, the touch detection circuit 17 detects a variation of a touch sensing value on the touch unit 15 during an acceptable time period. Besides, in step S712, the control circuit 19 updates the touch detection level corresponding to the predetermined voice model (i.e., the predetermined voice model to which the voice input signal detected by the voice detection circuit 16 conforms) according to the variation of the touch sensing value during the acceptable time period. Thereby, when next time the voice detection circuit 16 detects another voice input signal and the voice input signal conforms to aforementioned predetermined voice model, the control circuit 19 can determine whether a corresponding touch input signal is detected according to the updated touch detection level.

It should be mentioned that in each of the second, third, and fourth embodiment described above, the touch control device always detects the voice input signal first and then identifies the input tool and the touch behavior thereof according to the voice input signal and a touch input signal corresponding to the input tool. However, with specific hardware condition or in a specific software execution environment, the touch control device may first detect a touch input signal generated by a touch behavior of an input tool and then receive a voice input signal generated by the same. Thereby, the invention also provides a touch control device in which the identification is carried out by using a touch input signal along with a voice input signal, which will be described with reference to following fifth embodiment.

### Fifth Embodiment

The hardware structure of the touch control device in the fifth embodiment is substantially the same as that of the touch control device in the first embodiment, and the touch detection method in the fifth embodiment is similar to the touch detection method in the second embodiment. The difference is that in the fifth embodiment, the touch control device first detects the touch input signal generated by the input tool and then identifies the input tool and the touch behavior thereof according to the touch input signal and a voice input signal generated by the same input tool. Thereby, the touch control device can generate a corresponding application-specific command according to foregoing identification result, so that the flexibility in the application of the touch control device is improved.

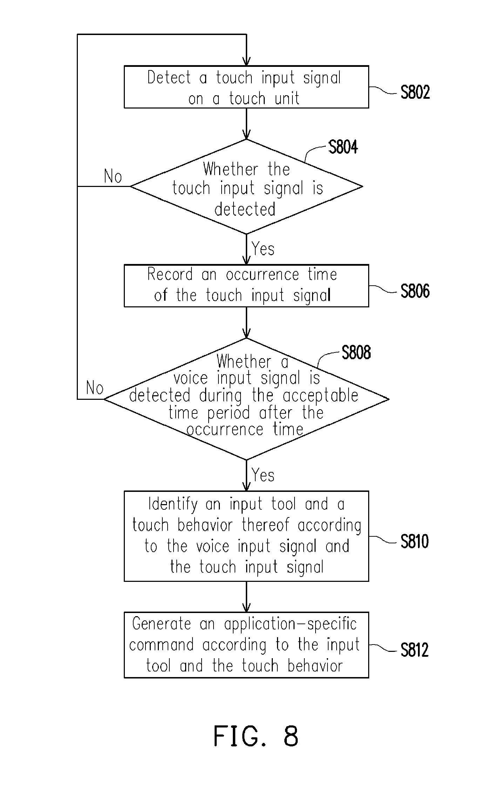

FIG. 8 is a flowchart of a touch detection method according to the fifth embodiment of the invention. Referring to FIG. 1 and FIG. 8, in step S802, the touch detection circuit 17 detects a touch input signal on the touch unit 15. Then, in step S804, the control circuit 19 determines whether the touch detection circuit 17 detects the touch input signal. If the touch detection circuit 17 does not detect any touch input signal, after step S804, the touch detection circuit 17 executes step S802 again.

If the touch detection circuit 17 detects the touch input signal in step S804, in step S806, the control circuit 19 records the touch input signal and an occurrence time thereof. Then, in step S808, the control circuit 19 determines whether the voice detection circuit 16 detects a voice input signal during the acceptable time period after the occurrence time. If the voice detection circuit 16 does not detect any voice input signal during the acceptable time period, the previously detected touch input signal is determined to be invalid, and after step S808, the touch detection circuit 17 executes step S802 again. On the other hand, if the voice detection circuit 16 detects a voice input signal during the acceptable time period, in step S810, the control circuit 19 identifies the type of the input tool and the touch behavior thereof according to the voice input signal and the touch input signal.

For example, the control circuit 19 sequentially compares the voice model of the voice input signal detected by the voice detection circuit 16 with a plurality of predetermined voice models in the storage circuit 18 and determines whether the voice model of the voice input signal is the same as or similar to at least one of these predetermined voice models. If the voice input signal detected by the voice detection circuit 16 conforms to a predetermined voice model, the control circuit 19 identifies the input tool and the touch behavior thereof according to this predetermined voice model and the touch input signal previous detected by the touch detection circuit 17.

Thereafter, in step S812, the control circuit 19 generates an application-specific command according to the input tool and the touch behavior identified in step S810.

### Sixth Embodiment

The hardware structure of the touch control device in the sixth embodiment is substantially the same as that of the touch control device in the first embodiment, and the touch detection method in the sixth embodiment is similar to the touch detection method in the third embodiment. The difference is that in the sixth embodiment, if no corresponding voice input signal is detected by the touch control device during an acceptable time period after the touch control device detects the touch input signal, the touch control device can generate a basic command according to the previously detected touch input signal. Thereby, the touch control device can still perform essential functions when no voice input signal can be used for identification purpose, so that the flexibility in the application of the touch control device is improved.

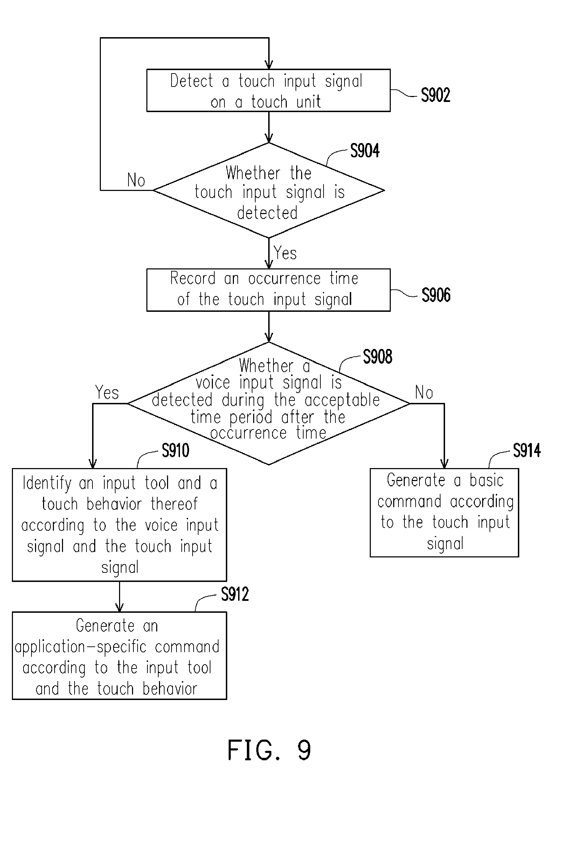

FIG. 9 is a flowchart of a touch detection method according to the sixth embodiment of the invention. Referring to FIG. 1 and FIG. 9, in step S902, the touch detection circuit 17 detects a touch input signal on the touch unit 15. Then, in step S904, the control circuit 19 determines whether the touch detection circuit 17 detects the touch input signal. If the touch detection circuit 17 does not detect any touch input signal, after step S904, the touch detection circuit 17 executes step S902 again.

If the touch detection circuit 17 detects a touch input signal in step S904, in step S906, the control circuit 19 records the touch input signal and the occurrence time thereof. Then, in step S908, the control circuit 19 determines whether the voice detection circuit 16 detects a voice input signal during the acceptable time period after the occurrence time. If the voice detection circuit 16 detects the voice input signal during the acceptable time period, in step S910, the control circuit 19 identifies the type of the input tool and the touch behavior thereof according to the voice input signal and the touch input signal. Next, in step S912, the control circuit 19 generates an application-specific command according to the input tool and the touch behavior thereof identified in step S910.

On the other hand, if the voice detection circuit 16 does not detect any voice input signal during the acceptable time period in step S908, in step S914, the control circuit 19 generates a basic command according to the touch input signal previously detected by the touch detection circuit 17.

It should be mentioned that in the present embodiment, the touch control device 10 may also determine whether to turn on or off the function of the voice detection circuit 16. For example, in order to reduce the power consumption or the system load, the touch control device 10 can selectively turn off the function of the voice detection circuit 16. For example, when the power supply 14 issues a low power alarm message, the control circuit 19 controls the voice detection circuit 16 to temporarily stop its operation, so that only basic commands are generated and accordingly the power consumption is reduced. Or, when the touch control device 10 enters a file editing mode, the control circuit 19 can start the voice detection circuit 16 to increase the efficiency of file editing by issuing application-specific commands. Taking a smart phone with a stylus slot as an example, when a user takes the stylus out of the slot, the smart phone starts the function of the voice detection circuit to identify whether the input tool touching the touch screen is the stylus or the user's finger.

As described above, in a touch detection method and a touch control device provided by embodiments of the invention, a voice input signal and a touch input signal generated by a touch behavior of an input tool on a touch unit are detected, and the voice input signal is compared with a predetermined voice model, so that the type of the input tool and the touch behavior can be identified according to the predetermined voice model and the touch input signal. In addition, an application-specific command is generated according to the type of the input tool and the touch behavior thereof. Thereby, by identifying a touch input signal with a voice input signal, both the accuracy in the detection of touch signals and the flexibility in the application of the touch control device can be effectively improved.

## Claims

1. A touch detection method, adapted to a touch control device (10), wherein the touch control device (10) has a touch unit (15), the touch detection method comprising:
detecting and recording (S202) a voice input signal (501) and a touch input signal (502) generated by a touch behavior of an input tool on the touch unit (15); and
identifying (S204) the input tool and the touch behavior according to the voice input signal (501) and the touch input signal (502), wherein the touch input signal (502) indicates a touch property corresponding to the touch behavior of the input tool on the touch unit (15), and the voice input signal (501) is used for identifying a type of the input tool.

2. The touch detection method according to claim 1, wherein the step of identifying (S204) the input tool and the touch behavior according to the voice input signal (501) and the touch input signal (502) comprises:
Determining (S304, S604) whether the voice input signal (501) is detected;
when the voice input signal (501) is detected, determining (S306, S606) whether the voice input signal (501) conforms to a predetermined voice model;
when the voice input signal (501) conforms to the predetermined voice model, recording (S308, S608) an occurrence time of the voice input signal (501), and determining (S310, S610) whether the touch input signal (502) is detected during an acceptable time period after the occurrence time;
when the touch input signal (502) is detected during the acceptable time period, identifying (S312, S612) the input tool and the touch behavior according to the predetermined voice model and the touch input signal (502); and
generating (S314, S614) an application-specific command according to the input tool and the touch behavior, wherein a function corresponding to the application-specific command is determined according to the type of the input tool and the touch behavior.

3. The touch detection method according to claim 2 further comprising:
when the voice input signal (501) does not conform to the predetermined voice model, determining (S616) whether the touch input signal (502) is detected; and
when the touch input signal (502) is detected, generating (S618) a basic command according to the touch input signal (502),
wherein a function corresponding to the basic command is determined according to the touch behavior.

4. The touch detection method according to claim 2, wherein the step of determining (S310) whether the touch input signal (502) is detected during the acceptable time period comprises:
detecting (S402) a variation of a touch sensing value corresponding to a touch position during the acceptable time period;
determining (S404) whether the variation is greater than a touch detection level; and
when the variation is greater than the touch detection level, determining (S406) that the touch input signal (502) is detected.

5. The touch detection method according to claim 4, wherein the step of recording (S308, S608) the occurrence time of the voice input signal (501) further comprises:
updating (S712) the touch detection level corresponding to the predetermined voice model according to the variation of the touch sensing value during the acceptable time period.

6. The touch detection method according to any one of claims 1 to 5 further comprising:
determining (S804, S904) whether the touch input signal (502) is detected;
when the touch input signal (502) is detected, recording (S806, S906) an occurrence time of the touch input signal (502), and determining (S808, S908) whether the voice input signal (501) is detected during an acceptable time period after the occurrence time;
when the voice input signal (501) is detected during the acceptable time period, identifying (S810, S910) the input tool and the touch behavior according to the voice input signal (501) and the touch input signal (502); and
generating (S812, S912) an application-specific command according to the input tool and the touch behavior, wherein a function corresponding to the application-specific command is determined according to the type of the input tool and the touch behavior.

7. The touch detection method according to claim 6 further comprising:
when the voice input signal (501) is not detected during the acceptable time period, generating (S914) a basic command according to the touch input signal (502),
wherein a function corresponding to the basic command is determined according to the touch behavior.

8. A touch control device (10), comprising:
a touch unit (15);
a voice detection circuit (16), coupled to the touch unit (15), and detecting a voice input signal (501) generated by a touch behavior of an input tool on the touch unit (15);
a touch detection circuit (17), coupled to the touch unit (15), and detecting a touch input signal (502) generated by the touch behavior of the input tool on the touch unit (15);
a storage circuit (18), coupled to the voice detection circuit (16) and the touch detection circuit (17), and storing the voice input signal (501) and the touch input signal (502); and
a control circuit (19), coupled to the storage circuit (18), the voice detection circuit (16), and the touch detection circuit (17), and identifying the input tool and the touch behavior according to the voice input signal (501) and the touch input signal (502), wherein the touch input signal (502) indicates a touch property corresponding to the touch behavior of the input tool on the touch unit (15), and the voice input signal (501) is used for identifying a type of the input tool.

9. The touch control device (10) according to claim 8, wherein the voice detection circuit (16) determines whether the voice input signal (501) is detected,
when the voice detection circuit (16) detects the voice input signal (501), the control circuit (19) determines whether the voice input signal (501) conforms to a predetermined voice model,
when the voice input signal (501) conforms to the predetermined voice model, the control circuit (19) records a occurrence time of the voice input signal (501) and determines whether the touch detection circuit (17) detects the touch input signal (502) during a acceptable time period after the occurrence time,
when the touch detection circuit (17) detects the touch input signal (502) during the acceptable time period, the control circuit (19) identifies the input tool and the touch behavior according to the predetermined voice model and the touch input signal (502) and generates an application-specific command according to the input tool and the touch behavior,
wherein a function corresponding to the application-specific command is determined according to the type of the input tool and the touch behavior.

10. The touch control device (10) according to claim 9, wherein when the control circuit (19) determines that the voice input signal (501) does not conform to the predetermined voice model, the control circuit (19) determines whether the touch detection circuit (17) detects the touch input signal (502),
when the touch detection circuit (17) detects the touch input signal (502), the control circuit (19) generates a basic command according to the touch input signal (502),
wherein a function corresponding to the basic command is determined according to the touch behavior.

11. The touch control device (10) according to claim 9, wherein the touch detection circuit (17) detects a variation of a touch sensing value on the touch unit (15) during the acceptable time period, wherein the touch sensing value is corresponding to a touch position,
wherein the control circuit (19) determines whether the variation is greater than a touch detection level,
when the variation is greater than the touch detection level, the control circuit (19) determines that the touch detection circuit (17) detects the touch input signal (502).

12. The touch control device (10) according to claim 11, wherein the control circuit (19) further updates the touch detection level corresponding to the predetermined voice model according to the variation of the touch sensing value during the acceptable time period.

13. The touch control device (10) according to any one of claims 8 to 12, wherein the control circuit (19) determines whether the touch detection circuit (17) detects the touch input signal (502),
when the touch detection circuit (17) detects the touch input signal (502), the control circuit (19) records a occurrence time of the touch input signal (502) and determines whether the touch detection circuit (17) detects the voice input signal (501) during a acceptable time period after the occurrence time,
when the touch detection circuit (17) detects the voice input signal (501) during the acceptable time period, the control circuit (19) identifies the input tool and the touch behavior according to the voice input signal (501) and the touch input signal (502) and generates a application-specific command according to the input tool and the touch behavior,
wherein a function corresponding to the application-specific command is determined according to the type of the input tool and the touch behavior.

14. The touch control device (10) according to claim 13, wherein the control circuit (19) determines whether the voice input signal (501) conforms to a predetermined voice model,
when the control circuit (19) determines that the voice input signal (501) conforms to the predetermined voice model, the control circuit (19) determines that the voice detection circuit (16) detects the voice input signal (501) and identifies the input tool and the touch behavior according to the predetermined voice model and the touch input signal (502).

15. The touch control device according to claim 13, wherein
when the touch detection circuit does not detect the voice input signal during the acceptable time period, the control circuit generates a basic command according to the touch input signal,
wherein a function corresponding to the basic command is determined according to the touch behavior.
